# EUROPÄISCHE PATENTSCHRIFT

(11) **EP 2 014 401 B1**
(45) Veröffentlichungstag und Bekanntmachung des Hinweises auf die Patenterteilung: **27.06.2012**
(21) Anmeldenummer: 08012421.7
(22) Anmeldetag: 09.07.2008
(51) Int. Cl.: B23K 5/213, B23K 9/235, B23K 26/42, B23K 9/32, B23K 37/00

(54) **Vorrichtung und Verfahren zum Schweißen von Werkstücken**
Method and device for welding workpieces
Dispositif et procédé destinés au soudage de pièces

(30) Priorität: 10.07.2007 DE 102007032067; 21.11.2007 EP 07022615
(43) Veröffentlichungstag der Anmeldung: 14.01.2009
(73) Patentinhaber: Linde AG, 80331 München (DE)
(72) Erfinder: Miklos, Ernst, 85551 Kirchheim (DE); Rebhan, Dieter, 82538 Geretsried (DE); Matz, Christoph, 85716 Unterschleißheim (DE)
(74) Vertreter: Schüssler, Andrea

(56) Entgegenhaltungen:
- EP-A- 1 319 460
- EP-A- 1 356 890
- WO-A-2007/080372

## Beschreibung

Die vorliegende Erfindung betrifft eine Vorrichtung und ein Verfahren zum Schweißen von Werkstücken.

Beim Schweißen werden Bauteile unter Anwendung von Wärme oder Druck mit oder ohne Schweißzusätze unlösbar miteinander verbunden. Schweißverfahren, die mit Wärme arbeiten, sind beispielsweise Feuerschweißen, Gasschmelzschweißen, Lichtbogenhandschweißen, Widerstandsschweißen, Laserstrahlschweißen, aluminothermisches Schweißen und Elektronenstrahlschweißen.

Mit den bekannten Schweißverfahren können metallische Werkstücke, Kunststoffteile sowie Glassteile miteinander dauerhaft und fest verbunden werden.

Häufig werden tiefgezogene bzw. hochdruckumgeformte metallische Bauteile mittels Schweißverfahren weiterbearbeitet.

Beim Tiefziehen wird ein Blechzuschnitt in einen einseitig offenen Hohlkörper oder ein vorgezogener Hohlkörper in einen Hohlkörper mit geringerem Querschnitt und ohne gewollte Veränderung der Blechdicke zugdruckumgeformt.

Um Ziehfehler, insbesondere das Reißen des Werkstoffs auch bei höheren Umformgraden zu verhindern, werden Ziehmittel, beispielsweise Fette, Öle, Seifen und Überzüge, verwendet. Dadurch werden die Verschleißerscheinungen am Werkzeug vermindert und die Oberflächenbeschaffenheit des Werkstücks verbessert. Diese Ziehmittel hinterlassen nach dem Umformprozess Rückstände auf der Oberfläche. Zum Schweißen der geformten Teile müssen diese von den Ziehmittelrückständen gereinigt werden, da die Ziehmittelsubstanzen eine hochwertige Verschweißung nicht zulassen. Das Entfernen der Ziehmittel durch Waschen oder Beizen ist sehr aufwändig und umweltbelastend, da das gesamte Bauteil gereinigt werden muss.

Beim Hochdruckumformen kann es passieren, dass die Ziehmittel so tief in die Aluminiumoberfläche eingepresst werden, dass ein vollständiges Entfernen durch Waschen oder Beizen nicht mehr möglich ist. Dies führt bei der weiteren Bearbeitung, beispielsweise beim Fügen durch Schweißen, zu Schweißnahtfehlern.

Zur Oberflächenreinigung ist das Reinigen mit CO₂-Pellets und CO₂-Strahl bekannt. Die Temperatur derartiger cryogener Medien beträgt von -50°C bis zu -196°C.

Aus der EP 1 356 890 A1 geht ein Teilbearbeitungs- bzw. Schweißverfahren hervor, das durch einen cryogenen Strahl unterstützt wird. Bei dem Verfahren wird eine Schweißeinrichtung verwendet, in deren unmittelbarer Nähe eine oder mehrere Düsen zum Ausgeben eines cryogenen Mediums angeordnet sind. Als cryogenes Medium kann flüssiger Stickstoff oder festes CO₂ verwendet werden. Durch das aus der bzw. den Düsen ausströmende cryogene Medium werden sich beim Schweißen bildende flüssige Metallspritzer sehr schnell abgekühlt und verfestigt. Auf diese Weise haften die flüssigen Metallspritzer nicht an der Werkstückoberfläche an und verunreinigen diese nicht. Dadurch ist eine Nachbearbeitung der Werkstücke überflüssig. Da die Schweißspritzer abgekühlt werden sollen, muss das cryogene Medium in unmittelbarer Nachbarschaft zum Lichtbogen zugeführt werden. Dies hat erheblichen Einfluss auf den Lichtbogen und beeinträchtigt den Schweißvorgang erheblich.

In der EP 1 319 460 A1 ist ein Verfahren zur Schweißvorbereitung von Werkstücken beschrieben. Bei diesem Verfahren ist vorgesehen, die beiden miteinander zu verbindenden Schweißkanten zweier Werkstücke nebeneinander anzuordnen und die Schweißkanten mit einem CO₂-Strahl zu bestrahlen, um auf diese Weise Verunreinigungen von der Werkstückoberfläche zu entfernen.

In der WO 2007/080372 A1 ist eine Vorrichtung zum Kühlen von Werkstücken beim Schweißen beschrieben. Die Vorrichtung weist ein Gehäuse mit einer Düse zum Abstrahlen eines cryogenen Mediums und mit einer Absaugung auf. Das Gehäuse ist mittels einer Dichtung dicht auf eine Werkstückoberfläche aufsetzbar. Hierdurch soll verhindert werden, dass beim Kühlen mittels cryogenem CO₂, beim Verdampfen des cryogenen CO₂, Gase in die Schweißnaht gelangen und auf diese Weise die Qualität der Schweißnaht beeinflusst wird. Die Vorrichtung kann Verbindungsmittel aufweisen, um mit einer Schweißvorrichtung derart verbunden zu werden, dass sie in Schweißrichtung hinter der Schweißvorrichtung angeordnet ist. Die Befestigungsmittel können derart ausgebildet sein, dass die Position der Vorrichtung bezüglich der Schweißvorrichtung einstellbar ist. Dabei ist vorgesehen, die Vorrichtung etwa 60 bis 90 mm hinter der Schweißvorrichtung anzuordnen. Mit dieser Vorrichtung sollen Verzüge nach dem Schweißvorgang effektiv minimiert werden. Die Vorrichtung soll für jede beliebige Schweißtechnik geeignet sein.

Aufgabe der Erfindung ist es ein Verfahren und eine Vorrichtung bereitzustellen, mit denen es möglich ist, dass Ziehmittelrückstände auf einer Werkstückoberfläche entfernt werden, ohne dass das gesamte Werkstück gereinigt werden muss. Zudem sollen Rückstände entfernt werden, die durch Beizen oder Waschen nicht entfernt werden können.

Die Aufgabe wird mit einer Vorrichtung mit den Merkmalen des Anspruchs 5 und einem Verfahren mit den Merkmalen des Anspruchs 1 gelöst.

Vorteilhafte Weiterbildungen sind in den jeweiligen Unteransprüchen angegeben.

Mit der erfindungsgemäßen Vorrichtung können Werkstückoberflächen dem Schweißvorgang vorauseilend gereinigt und gekühlt werden.

Beim Beschuss der Werkstückoberfläche mit cryogenem Medium entstehen mehrere vorteilhafte Effekte. Neben dem zunächst erfolgenden mechanischen Abtragen von Trenn- bzw. Ziehmittelrückständen durch Abrasion ergibt sich eine starke punktuelle Abkühlung des bestrahlten Bereiches, woraus sich vorteilhafte Effekte für den nachfolgenden Schweißvorgang ergeben. Der Einzugsbereich der Schweißnaht wird vollständig von Verunreinigungen befreit, wodurch eine optimale Schweißnaht erzeugt werden kann. Durch die Kühlung des Einzugsbereichs der Schweißnaht möglichst unmittelbar vor dem Schweißvorgang, wird die Qualität der Schweißnaht zusätzlich verbessert und der Verzug am Werkstück wird minimiert, wodurch spätere Richtarbeiten reduziert werden bzw. zum Teil völlig entfallen können. Zudem geht das cryogene Medium beim Aufprall auf die Oberfläche unter Atmosphärendruck in den gasförmigen Zustand über, wobei eine ca. 600-fache Volumenvergrößerung des cryogenen Mediums stattfindet. Die dadurch entstehenden Gaswirbel entfernen die unterkühlten und versprödeten Trenn- bzw. Ziehmittelrückstände, ohne die Werkstückoberfläche zu beschädigen.

Die erfindungsgemässe Schweißvorrichtung ist vor allem zum Schweißen von metallischen Werkstücken ausgebildet. Im Rahmen der vorliegenden Erfindung ist es jedoch möglich, Schweißeinrichtungen zum Schweißen von Werkstücken aus Kunststoff oder Glas vorzusehen. Auch diese Werkstücke können mit einem cryogenen Medium gereinigt werden. Bei Kunstoffen können vor allem Trennmittel und Spritzhäute von spritzgegossenen Kunststoffteilen entfernt werden. Geeignete Schweißverfahren zum Schweißen von Kunststoffen sind Warmgasschweißen, Heizelementschweißen, Reibschweißen, Ultraschallschweißen, Hochfrequenzschweißen und Laserschweißen.

Die Erfindung wird beispielhaft anhand der Zeichnung erläutert. Es zeigt dabei schematisch:

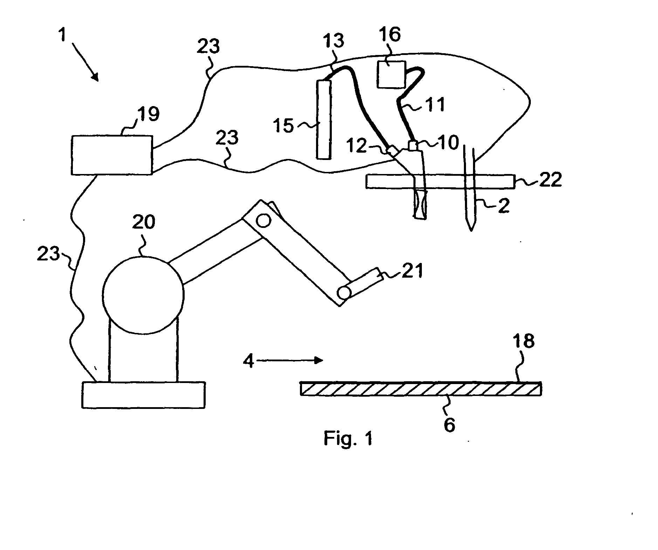

- Fig. 1: ein erstes Ausführungsbeispiel einer Schweißvorrichtung mit einem Roboter zum Handhaben einer Schweißeinrichtung und einer CO₂-Düse

Die erfindungsgemäße Schweißvorrichtung 1 gemäß einem ersten Ausführungsbeispiel umfasst einen Roboter 20 mit einem Wechselsystem 21. Das Wechselsystem 21 ist eine Aufnahme am Ende des Roboterarms, um verschiedene Werkzeuge aufzunehmen. Als Werkzeuge sind eine Schweißeinrichtung 2 und eine CO₂-Düse 7 vorgesehen, die vom Wechselsystem 21 des Roboters 10 aufgenommen werden. Die Werkzeuge 2, 7 sind in einem separaten Magazin 22 angeordnet.

Die Schweißvorrichtung 1 umfasst eine Steuereinrichtung 19 zur Ansteuerung des Roboters 20, des Wechselsystems 21 und der Werkzeuge 2, 7. Die Steuereinrichtung 19 ist mit dem Roboter 20, dem Wechselsystem 21 und den Werkzeugen 2, 7 über Datenleitungen 23 verbunden.

Die Schweißeinrichtung 2 kann beispielsweise als Einrichtung zum Schutzgasschweißen ausgebildet sein.

Die CO₂-Düse 7 bzw. Pistole gibt ein cryogenes CO₂-Pressluft-Gemisch 8 bzw. ein cryogenes Medium 8 aus. Insbesondere ist das cryogene Medium ein Trockeneisschnee-Pressluft-Gemisch. An der CO₂-Düse 7 ist über ein Pressluftventil 10 eine Pressluftleitung 11 und über ein CO₂-Ventil 12 eine CO₂-Leitung 13 angeschlossen. Beide Ventile 10, 12 münden in eine Mischkammer 14 der CO₂-Düse 7. In der Mischkammer 14 wird aus flüssigen CO₂ und/oder CO₂-Kaltgas und/oder CO₂-Pellets und/oder CO₂-Schnee und Pressluft ein cryogenes CO₂-Pressluft-Gemisch 8 erzeugt.

Die Pressluftleitung 11 ist mit einer Pressluftversorgung 16 verbunden. Die CO₂-Leitung 13 ist an einen CO₂-Vorratsbehälter 15 angeschlossen.

Nach der Mischkammer 14 ist eine Lavaldüse 17 angeordnet. Mittels der Lavaldüse 17 wird das cryogene CO₂-Pressluft-Gemisch 8 auf annähernd Schallgeschwindigkeit beschleunigt.

Mit der Steuereinrichtung 19 kann die Ausbildung der Schweißnaht 4 und die Menge an ausgegebenem cryogenem CO₂-Pressluft-Gemisch gesteuert werden. Mit der Steuereinrichtung 19 werden die Bewegungen des Roboters 20 gesteuert.

Nachfolgend wird die Anwendung der oben beschriebenen Vorrichtung 1 beschrieben.

Die Steuereinrichtung 19 steuert den gesamten Arbeitsablauf der Schweißvorrichtung 1, indem sie entsprechend den Roboter 20, das Wechselsystem 21, die CO₂-Düse 7 und die Schweißeinrichtung 2 ansteuert.

Das Wechselsystem 21 des Roboters 20 entnimmt die CO₂-Düse 7 aus dem Magazin 22 und positioniert sie entsprechend über einer zu reinigenden Werkstücksoberfläche 5 eines Werkstücks 6.

Über die Steuereinrichtung 19 werden das CO₂-Ventil 12 und das Pressluftventil 10 an der CO₂-Düse 7 angesteuert. Pressluft und cryogenes CO₂ strömen in die Mischkammer 14 der CO₂-Düse 7 ein. In der Mischkammer 14 bildet sich das cryogene CO₂-Pressluft-Gemisch 8. Das cryogene CO₂-Pressluft-Gemisch wird beim Durchströmen der Lavaldüse 17 auf annähernd Schallgeschwindigkeit beschleunigt.

Beim Austritt aus der Lavaldüse 17 bzw. der CO₂-Düse 7 trifft das cryogene CO₂-Pressluft-Gemisch 8 auf das an einer Werkstückoberfläche 5 anhaftende Ziehmittel 18 und entfernt dieses, sodass eine saubere Werkstückoberfläche 5 bereitgestellt wird auf der eine hochwertige Schweißnaht 3 hergestellt werden kann. Der Roboter 20 verfährt die CO₂-Düse 7 in Schweißrichtung 4.

Zudem wird der Bereich in dem die Schweißnaht 3 ausgebildet wird abgekühlt, was zu einem geringeren Verzug des Werkstücks 6 führt.

Wenn der gesamte zu reinigende Bereich gereinigt wurde, legt der Roboter 20 bzw. das Wechselsystem 21 die CO₂-Düse 7 wieder im Magazin 22 ab und entnimmt die Schweißeinrichtung 2 aus dem Magazin 22 und positioniert diese über dem gereinigten und gekühlten Bereich der Werkstückoberfläche 5. Die Schweißeinrichtung 2 wird dann von der Steuereinrichtung 19 angesteuert und beginnt mit der Herstellung einer Schweißnaht 3 in Schweißrichtung 4 auf der Werkstückoberfläche 5. Das Werkstück 6 ist beispielsweise ein tiefgezogenes Aluminiumbauteil.

Weiterhin wird die Schweißnaht 3 mit der CO₂-Düse 7 nachbehandelt, um diese zu reinigen und/oder den Verzug zu minimieren.

Insbesondere beim Schweißen von Aluminium ist das Herstellen sauberer Schweißnähte und eine Nachreinigung wichtig, da die Schweißnähte oft Sichtnähte sind, die nicht nachgearbeitet, d.h. poliert oder lackiert werden müssen.

Als cryogenes CO₂-Pressluft-Gemisch ist insbesondere eine Mischung aus flüssigem CO₂ oder CO₂-Schnee oder CO₂-Pelletts oder gasförmigem CO₂ mit Pressluft vorgesehen.

Bei dem Schweißvorgang vorauseilenden Beschuss mit cryogenem Medium entstehen mehrere vorteilhafte Effekte. Neben dem zunächst erfolgenden mechanischen Abtragen von Trenn- bzw. Ziehmittelrückständen durch Abrasion ergibt sich eine starke punktuelle Abkühlung des bestrahlten Bereiches unmittelbar vor dem Schweißvorgang. Der Einzugsbereich der Schweißnaht wird vollständig von Verunreinigungen befreit, wodurch eine optimale Schweißnaht erzeugt werden kann. Durch die Kühlung des Einzugsbereichs der Schweißnaht werden die Verzüge am Werkstück minimiert, wodurch spätere Richtarbeiten zum Teil völlig entfallen können. Zudem geht das cryogene Medium beim Aufprall auf die Oberfläche unter Atmosphärendruck in den gasförmigen Zustand über, wobei eine ca. 600-fache Volumenvergrößerung des cryogenen Mediums stattfindet. Die dadurch entstehenden Gaswirbel entfernen die unterkühlten und versprödeten Trenn- bzw. Ziehmittelrückstände, ohne die Werkstückoberfläche zu beschädigen.

Oben ist die Erfindung anhand des Fügens von metallischen Werkstücken erläutert worden. Die Erfindung ist jedoch nicht auf das Fügen von metallischen Werkstücken beschränkt. Im Rahmen der Erfindung ist es auch möglich andere Materialien, wie z. B. Kunststoffe oder Glas zu fügen und vorab mittels eines cryogenen Mediums im Bereich der Fügenaht zu kühlen und zu reinigen.

### Bezugszeichenliste

- 1: Schweißvorrichtung
- 2: Schweißeinrichtung
- 3: Schweißnaht
- 4: Schweißrichtung
- 5: Werkstückoberfläche
- 6: Werkstück
- 7: CO₂-Düse
- 8: cryogenes CO₂-Pressluft-Gemisch
- 9: Verbindungselement
- 10: Pressluftventil
- 11: Pressluftleitung
- 12: CO₂-Ventil
- 13: CO₂-Leitung
- 14: Mischkammer
- 15: CO₂-Vorratsbehälter
- 16: Pressluftversorgung
- 17: Lavaldüse
- 18: Ziehmittel
- 19: Steuereinrichtung
- 20: Roboter
- 21: Wechselsystem
- 22: Magazin
- 23: Datenleitung

## Patentansprüche

1. Verfahren zum Schweißen von Werkstücken, wobei die Werkstücke (6) mit einem cryogenen Medium (8) auf ihren Oberflächen (5) im Bereich ihrer auszubildenden Schweißnaht bestrahlt werden, um diesen Bereich zu reinigen und zu kühlen, und die Werkstücke in dem gereinigten Bereich miteinander verschweißt werden
**dadurch gekennzeichnet,**
**dass** ein Wechselsystem (21) eines Roboters (20) eine CO₂-Düse (7) aus einem Magazin (22) entnimmt und damit die Oberfläche eines Werkstückes im Bereich der auszubildenden Schweißnaht mittels des cryogenen Mediums (8) bestrahlt, wobei der Roboter (20) anschließend die CO₂-Düse (7) wieder im Magazin (22) ablegt und eine Schweißeinrichtung (2) aus dem Magazin (22) entnimmt und damit dann eine Schweißnaht (3) in Schweißrichtung (4) auf der Werkstückoberfläche (5) erzeugt, wobei die Schweißnaht (3) mit der CO₂-Düse (7) nachbehandelt wird, um diese zu reinigen und/oder den Verzug zu minimieren.

2. Verfahren nach Anspruch 1,
**dadurch gekennzeichnet,**
**dass** als cryogenes Medium (8) ein cryogenes CO₂-Pressluft-Gemisch abgestrahlt wird.

3. Verfahren nach Anspruch 2,
**dadurch gekennzeichnet,**
**dass** im cryogenen CO₂-Pressluft-Gemisch (8) flüssiges CO₂ oder CO₂-Schnee oder CO₂-Pellets oder gasförmiges CO₂ verwendet wird.

4. Verfahren nach einem der Ansprüche 1 bis 3,
**dadurch gekennzeichnet,**
**dass** metallische, tiefgezogene Bauteile geschweißt werden, wobei die Bauteile durch das cryogene Medium von Ziehmittelrückständen gereinigt werden.

5. Schweißvorrichtung zum Ausführen des Verfahrens nach Anspruch 1, mit einer Schweißeinrichtung (2) zum Erzeugen einer Schweißnaht (3) auf Werkstücken (6) und einer CO₂-Düse (7), um ein cryogenes Medium (8) auf die Oberflächen (5) der Werkstücke (6) im Bereich ihrer auszubildenden Schweißnaht abzustrahlen, **dadurch gekennzeichnet dass** die Schweißvorrichtung (1) umfasst
einen Roboter (20) mit einem Wechselsystem (21),
wobei das Wechselsystem (21) am Ende eines Roboterarms des Roboters (20) angeordnet ist und als Aufnahme (21) zum Aufnehmen der Schweißeinrichtung (2) und der CO₂-Düse (7) ausgebildet ist,
wobei die Schweißeinrichtung (2) und die CO₂-Düse (7) in einem Magazin (22) angeordnet sind, und
eine Steuereinrichtung (19) zur Ansteuerung des Roboters (20), des Wechselsystems (21), der Schweißeinrichtung (2) und der CO₂-Düse (7) die derart ausgebildet ist,
dass der Bereich der auszubildenden Schweißnaht mittels der CO₂-Düse (7) bestrahlt und nachfolgend mittels der Schweißeinrichtung (2) verschweißt wird, wobei die Schweißnaht (3) mit der CO₂-Düse (7) nachbehandelt wird, um diese zu reinigen und/oder den Verzug zu minimieren.

6. Schweißvorrichtung gemäß Anspruch 5,
**dadurch gekennzeichnet,**
**dass** die CO₂-Düse (7) eine Mischkammer (14) aufweist, die zum Erzeugen eines cryogenen CO₂-Pressluft-Gemisches (8) aus flüssigen CO₂ und/oder CO₂-Kaltgas und/oder CO₂-Pellets und/oder CO₂-Schnee und Pressluft ausgebildet ist.

7. Schweißvorrichtung nach Anspruch 5 oder 6,
**dadurch gekennzeichnet,**
**dass** die Schweißeinrichtung (2) als Einrichtung zum Gasschmelzschweißen, Lichtbogenhandschweißen oder Laserstrahlschweißen ausgebildet ist.

8. Schweißvorrichtung nach einem der Ansprüche 5 bis 7,
**dadurch gekennzeichnet,**
**dass** die Steuereinrichtung (19) zum Ausführen eines Verfahrens nach einem der Ansprüche 1 bis 4 ausgebildet ist.

## Claims

1. Method for welding workpieces, wherein a cryogenic medium (8) is impacted on the surfaces (5) of the workpieces (6) in the region in which the weld seam of the latter is to be formed in order to clean and to cool this region, and the workpieces are welded to one another in the cleaned region,
**characterized**
**in that** a change-over system (21) of a robot (20) removes a CO₂ nozzle (7) from a magazine (22) and impacts the surface of a workpiece therewith in the region in which the weld seam is to be formed by means of the cryogenic medium (8), wherein the robot (20) then places the CO₂ nozzle (7) back in the magazine (22), removes a welding device (2) from the magazine (22) and then produces a weld seam (3) therewith in the welding direction (4) on the workpiece surface (5), wherein the weld seam (3) is after-treated with the CO₂ nozzle (7) in order to be cleaned and/or to minimize distortion.

2. Method according to Claim 1,
**characterized**
**in that** a cryogenic mixture of CO₂ and compressed air is emitted as the cryogenic medium (8).

3. Method according to Claim 2,
**characterized**
**in that** liquid CO₂ or CO₂ snow or CO₂ pellets or gaseous CO₂ are used in the cryogenic mixture (8) of CO₂ and compressed air.

4. Method according to one of Claims 1 to 3,
**characterized**
**in that** metallic deep-drawn components are welded, wherein the components are freed from drawing agent residues by the cryogenic medium.

5. Welding apparatus for carrying out the method according to Claim 1, comprising
a welding device (2) for producing a weld seam (3) on workpieces (6) and a CO₂ nozzle (7), in order to emit a cryogenic medium (8) onto the surfaces (5) of the workpieces (6) in the region in which the weld seam of the latter is to be formed,
**characterized**
**in that** the welding apparatus (1) comprises a robot (20) with a change-over system (21), wherein the change-over system (21) is arranged at the end of an arm of the robot (20) and is in the form of a receptacle (21) for receiving the welding device (2) and the CO₂ nozzle (7),
wherein the welding device (2) and the CO₂ nozzle (7) are arranged in a magazine (22), and
a control device (19) for activating the robot (20), the change-over system (21), the welding device (2) and the CO₂ nozzle (7), which control device is formed in such a manner
that the region of the weld seam to be formed is impacted by means of the CO₂ nozzle (7) and is then welded by means of the welding device (2), wherein the weld seam (3) is after-treated with the CO₂ nozzle (7) in order to be cleaned and/or to minimize distortion.

6. Welding apparatus according to Claim 5,
**characterized**
**in that** the CO₂ nozzle (7) has a mixing chamber (14), which is designed to produce a cryogenic mixture (8) of CO₂ and compressed air from liquid CO₂ and/or cold CO₂ gas and/or CO₂ pellets and/or CO₂ snow and compressed air.

7. Welding apparatus according to Claim 5 or 6,
**characterized**
**in that** the welding device (2) is in the form of a device for gas fusion welding, manual arc welding or laser beam welding.

8. Welding apparatus according to one of Claims 5 to 7,
**characterized**
**in that** the control device (19) is designed to carry out a method according to one of Claims 1 to 4.

## Revendications

1. Procédé pour le soudage de pièces, dans lequel on soumet les pièces (6) à un jet de fluide cryogénique (8) sur leurs surfaces (5) dans une région du cordon de soudure à y former, afin de nettoyer et de refroidir cette région, et on soude les pièces l'une à l'autre dans la région nettoyée, **caractérisé en ce qu'**un système de changement (21) d'un robot (20) prélève une buse à CO₂ (7) dans un magasin (22) et arrose avec celle-ci la surface d'une pièce dans la région du cordon de soudure à former au moyen du fluide cryogénique (8), dans lequel le robot (20) dépose ensuite de nouveau la buse à CO₂ (7) dans le magasin (22) et prélève un équipement de soudage (2) dans le magasin et produit alors avec celui-ci un cordon de soudure (3) dans la direction de soudage (4) sur la surface (5) de la pièce, dans lequel on parachève le cordon de soudure (3) avec la buse à CO₂ (7) afin de nettoyer celui-ci et/ou de minimiser la déformation.

2. Procédé selon la revendication 1, **caractérisé en ce que** l'on utilise comme fluide cryogénique (8) un jet de mélange cryogénique CO₂-air comprimé.

3. Procédé selon la revendication 2, **caractérisé en ce que** l'on utilise, dans le mélange cryogénique CO₂-air comprimé (8), du CO₂ liquide ou de la neige carbonique ou des pellets de CO₂ ou du CO₂ gazeux.

4. Procédé selon l'une quelconque des revendications 1 à 3, **caractérisé en ce que** l'on soude des composants métalliques emboutis, dans lequel on débarrasse les composants des résidus d'emboutissage au moyen du fluide cryogénique.

5. Dispositif de soudage pour la mise en oeuvre du procédé selon la revendication 1 avec un équipement de soudage (2) destiné à produire un cordon de soudure (3) sur des pièces (6) et avec une buse à CO₂ (7), destinée à projeter un fluide cryogénique (8) sur les surfaces (5) des pièces (6) dans la région du cordon de soudure à y former, **caractérisé en ce que** le dispositif de soudage (1) comprend un robot (20) avec un système de changement (21), dans lequel le système de changement (21) est disposé à l'extrémité d'un bras de robot du robot (20) et est réalisé en forme de logement (21) destiné à accueillir l'équipement de soudage (2) et la buse à CO₂ (7), dans lequel l'équipement de soudage (2) et la buse à CO₂ (7) sont disposés dans un magasin (22), et un dispositif de commande (19) destiné à commander le robot (20), le système de changement (21), l'équipement de soudage (2) et la buse à CO₂ (7), qui est configurée de telle manière que la région du cordon de soudage à former soit arrosée par la buse à CO₂ (7) et soit ensuite soudée au moyen de l'équipement de soudage (2), dans lequel le cordon de soudure (3) est ensuite parachevé avec la buse à CO₂ (7), afin de nettoyer celui-ci et/ou de minimiser la déformation.

6. Dispositif de soudage selon la revendication 5, **caractérisé en ce que** la buse à CO₂ (7) présente une chambre de mélange (14), qui est configurée de façon à produire un mélange cryogénique CO₂-air comprimé (8) à partir de CO₂ liquide et/ou de CO₂ gazeux froid et/ou de pellets de CO₂ et/ou de neige carbonique et d'air comprimé.

7. Dispositif de soudage selon la revendication 5 ou 6, **caractérisé en ce que** l'équipement de soudage (2) est réalisé sous la forme d'un équipement destiné au soudage par fusion sous gaz, au soudage manuel à l'arc électrique ou au soudage par faisceau laser.

8. Dispositif de soudage selon l'une quelconque des revendications 5 à 7, **caractérisé en ce que** le dispositif de commande (19) est configuré de façon à mettre en oeuvre un procédé selon l'une quelconque des revendications 1 à 4.
